(19) Europäisches Patentamt
European Patent Office
Office européen des brevets

(11) EP 3 812 413 A1

(12) EUROPEAN PATENT APPLICATION
published in accordance with Art. 153(4) EPC

(43) Date of publication:
**28.04.2021 Bulletin 2021/17**

(21) Application number: **19822778.7**

(22) Date of filing: **14.06.2019**

(51) Int Cl.:
***C08G 63/672*** *(2006.01)* ***B32B 27/36*** *(2006.01)*
***C09D 167/00*** *(2006.01)* ***C09J 167/00*** *(2006.01)*

(86) International application number:
**PCT/JP2019/023695**

(87) International publication number:
**WO 2019/244797 (26.12.2019 Gazette 2019/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2018 JP 2018118380**

(71) Applicant: **Mitsubishi Chemical Corporation**
**Chiyoda-ku**
**Tokyo 100-8251 (JP)**

(72) Inventors:
- **TAMURA, Yoko**
  **Tokyo 100-8251 (JP)**
- **OZAWA, Tadahiro**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) AMORPHOUS POLYESTER RESIN, ADHESIVE, COATING COMPOSITION AND MULTILAYER BODY

(57) Provided is an amorphous polyester resin that reduces environmental load by using biomass-derived monomers and has excellent solvent solubility and excellent gas barrier properties. The amorphous polyester resin of the present invention contains a structural unit represented by General Formula (1) and a structural unit derived from isophthalic acid, and a total amount of the structural unit represented by General Formula (1) and the structural unit derived from isophthalic acid is equal to or higher than 70 parts by mole with respect to the total amount of 100 parts by mole of structural units derived from acid components contained in the amorphous polyester resin.

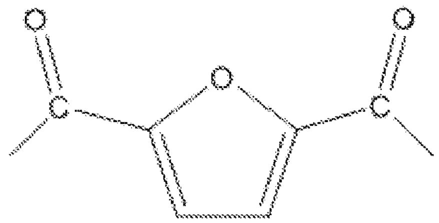

・・・(1)

EP 3 812 413 A1

## Description

[Technical Field]

The present invention relates to an amorphous polyester resin, an adhesive, a coating composition, and a multilayer body.

Priority is claimed on Japanese Patent Application No. 2018-118380, filed on June 22, 2018, the content of which is incorporated herein by reference.

[Background Art]

Polyester resins are used for a variety of uses such as coating materials, adhesives, films, and molded products. Polyethylene terephthalate (PET), which is a sort of polyester resin, is inexpensive and excellent in mechanical properties, chemical stability, transparency, and the like, and is widely used as a container for beverages, seasonings, and the like.

For these uses, gas barrier properties against oxygen, carbon dioxide, water vapor, and the like are required so that the contents can be stably stored for a long period of time. In order to impart gas barrier properties to polyester resin containers, films or adhesives using polyester resins having gas barrier properties are being studied.

In recent years, from the viewpoint of environmental protection such as suppression of global warming, carbon neutrality has attracted particular attention. Attempts have been made to replace the conventional petroleum-based plastics with plant-based plastics reducing environmental load, and studies are being continued regarding polyester resins using biomass-derived monomers.

As techniques for improving the gas barrier properties of polyester resins, a resin composition containing orthophthalic acid as an essential component (Patent Literature 1) and a resin composition containing isophthalic acid as an essential component (Patent Literature 2) have been proposed.

Focusing on the polyester resin skeleton, these have been proposed as techniques for improving the barrier ability by reducing the free-volume holes between polymer chains. According to these techniques, the resin compositions are used as coating materials or adhesives by being dissolved in solvents and applied to a substrate film such as PET.

The furan skeleton is known to have higher gas barrier properties compared to the benzene skeleton. As a film with excellent gas barrier properties, a film having poly(alkylene-2,5-furandicarboxylate) has been proposed (Patent Literature 3).

2,5-Furandicarboxylic acid is a biomass-derived substance, and is attracting attention as a raw material of biomass polyester including in Patent Literature 3.

[Citation List]

[Patent Literature]

[Patent Literature 1]
Japanese Unexamined Patent Application, First Publication No. 2014-133797
[Patent Literature 2]
Japanese Unexamined Patent Application, First Publication No. 2015-147895
[Patent Literature 3]
Published Japanese Translation No. 2017-518406 of the PCT International Publication

[Summary of Invention]

[Technical Problem]

However, with the method described in Patent Literature 1 or Patent Literature 2, sufficient gas barrier properties are not obtained.

Furthermore, in the method described in Patent Literature 3, the solvent solubility of the polyester resin is insufficient, and it is difficult to use the resin as a coating agent or an adhesive.

An object of the present invention is to provide a polyester resin that reduces environmental load by using biomass-derived monomers and has excellent solvent solubility and excellent gas barrier properties.

[Solution to Problem]

The present invention has the following aspects.

[1] An amorphous polyester resin containing a structural unit represented by General Formula (1) and a structural unit derived from isophthalic acid, in which a total amount of the structural unit represented by General Formula (1) and the structural unit derived from the isophthalic acid in the amorphous polyester resin is equal to or higher than 70 parts by mole with respect to the total amount of 100 parts by mole of structural units derived from acid components contained in the amorphous polyester resin.

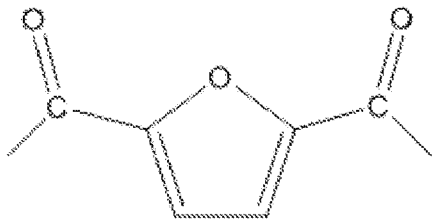 ···(1)

[2] The amorphous polyester resin described in [1], further containing a structural unit derived from a linear aliphatic diol.
[3] The amorphous polyester resin described in [2], in which a total amount of the structural unit derived from the linear aliphatic diol is equal to or higher than 60 parts by mole with respect to the total amount of 100 parts by mole of the structural units derived from the acid components contained in the amorphous polyester resin.
[4] The amorphous polyester resin described in any one of [1] to [3], in which an amount of a methyl ethyl ketone-insoluble matter is equal to or lower than 2% by mass.
[5] The amorphous polyester resin described in any one of [1] to [4], in which an acid value is equal to or higher than 5 mg KOH/g.
[6] An adhesive containing the amorphous polyester resin described in any one of [1] to [5].
[7] A coating composition containing the amorphous polyester resin described in any one of [1] to [5].
[8] A multilayer body containing the amorphous polyester resin described in any one of [1] to [5].

[Advantageous Effects of Invention]

The amorphous polyester resin of the present invention can reduce the environmental load because the resin uses biomass-derived monomers. Furthermore, the resin has excellent solvent solubility and excellent gas barrier properties. Therefore, the amorphous polyester resin of the present invention can be suitably used as a coating material, an adhesive, a film, and the like.
The adhesive, the coating composition, and the multilayer body of the present invention can reduce environmental load and have excellent gas barrier properties because they contain the amorphous polyester resin of the present invention. Furthermore, owing to the excellent solvent solubility of the amorphous polyester resin of the present invention, the adhesive, the coating composition, and the multilayer body of the present invention can be efficiently manufactured.

[Description of Embodiments]

The amorphous polyester resin of the present invention (hereinafter, also simply called "polyester resin of the present invention") contains a structural unit represented by General Formula (1) (hereinafter, also called "structural unit (1)") and a structural unit derived from isophthalic acid (hereinafter, also called "isophthalic acid unit").

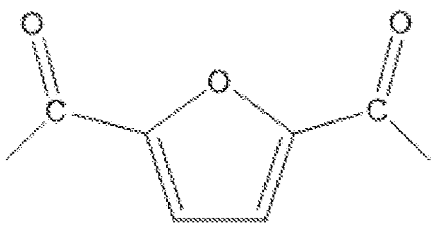 ···(1)

Because the polyester resin contains the structural unit (1), the gas barrier properties of the polyester resin can be improved.

In order to sufficiently improve the gas barrier properties of the polyester resin, an amount of the structural unit (1) in the amorphous polyester resin of the present invention with respect to the total amount of 100 parts by mole of structural units derived from acid components contained in the amorphous polyester resin of the present invention is preferably equal to or higher than 10 parts by mole, more preferably equal to or higher than 20 parts by mole, and even more preferably equal to or higher than 40 parts by mole.

By the polycondensation of an acid component containing 2,5-furandicarboxylic acid represented by Formula (2) and an alcohol component, the structural unit (1) can be incorporated into the amorphous polyester resin of the present invention.

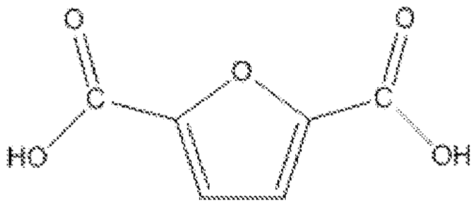

・・・(2)

Because the polyester resin contains the isophthalic acid unit, the solvent solubility and gas barrier properties of the polyester resin can be improved.

In the amorphous polyester resin of the present invention, a total amount of the structural unit (1) and the isophthalic acid unit in the amorphous polyester resin with respect to the total amount of 100 parts by mole of structural units derived from acid components contained in the amorphous polyester resin is equal to or higher than 70 parts by mole, and preferably equal to or higher than 85 parts by mole.

In a case where a total amount of the structural unit (1) and the isophthalic acid unit is equal to or higher than the lower limit described above, sufficient solvent solubility and gas barrier properties can be easily obtained.

The amorphous polyester resin of the present invention may contain structural units derived from acid components other than the 2,5-furandicarboxylic acid and isophthalic acid described above.

Examples of the structural units derived from acid components other than the 2,5-furandicarboxylic acid and isophthalic acid include structural units derived from aromatic dicarboxylic acids such as divalent carboxylic acids such as terephthalic acid and orthophthalic acid or esters thereof or anhydrides thereof; aliphatic dicarboxylic acids such as sebacic acid, isodecylsuccinic acid, dodecenylsuccinic acid, maleic acid, fumaric acid, adipic acid, succinic acid, or esters thereof or anhydrides thereof; and the like.

The acids from which these structural units are derived may be plant-derived substances or petroleum-derived substances.

Among these structural units, structural units derived from orthophthalic acids and linear aliphatic dicarboxylic acids are preferable because these make it easy to reduce free-volume holes.

The amorphous polyester resin of the present invention may contain one structural unit or two or more structural units derived from acid components other than 2,5-furandicarboxylic acid and isophthalic acid.

It is preferable that the polyester resin of the present invention contains a structural unit derived from a linear aliphatic diol (hereinafter, also called "linear aliphatic diol unit") as a structural unit derived from an alcohol component.

Because the polyester resin contains the linear aliphatic diol unit, the obtained resin tends to have small free-volume holes and excellent gas barrier properties.

An amount of the linear aliphatic diol unit in the amorphous polyester resin of the present invention is preferably equal to or higher than 60 parts by mole with respect to the total amount of 100 parts by mole of structural units derived from acid components contained in the amorphous polyester resin of the present invention.

Examples of the linear aliphatic diol unit include structural units derived from ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, and the like.

From the viewpoint of solvent solubility, it is more preferable that the linear aliphatic diol unit has an odd number of carbon atoms.

The amorphous polyester resin of the present invention may contain one linear aliphatic diol unit or two or more linear aliphatic diol units.

The amorphous polyester resin of the present invention may contain a diol-derived structural unit other than the linear aliphatic diol unit.

Examples of the diol-derived structural unit other than the linear aliphatic diol unit include structural units derived from aliphatic diols such as neopentyl glycol, 1,2-propanediol, 1,3-butanediol, diethylene glycol, triethylene glycol, 1,4-cyclohexanedimethanol, and isosorbide; and aromatic diols such as polyoxypropylene(2.0)-2,2-bis(4-hydroxyphenyl)propane, polyoxypropylene(2.2)-2,2-bis(4-hydroxyphenyl)propane, polyoxypropylene(2.3)-2,2-bis(4-hydroxyphenyl)propane, polyoxypropylene(2.4)-2,2-bis(4-hydroxyphenyl)propane, polyoxypropylene(3.3)-2,2-bis(4-hydroxyphenyl)propane, polyoxypropylene(6.0)-2,2-bis(4-hydroxyphenyl)propane, polyoxyethylene(2.0)-2,2-bis(4-hydroxyphenyl)propane, polyoxyethylene(2.2)-2,2-bis(4-hydroxyphenyl)propane, polyoxyethylene(2.3)-2,2-bis(4-hydroxyphenyl)propane, and polyoxypropylene(2.2)-polyoxyethylene(2.0)-2,2-bis(4-hydroxyphenyl)propane.

The numerical values in parentheses after oxyethylene or oxypropylene in the aromatic diols indicate the average number of moles of oxyethylene group or oxypropylene group added.

The diols from which these structural units are derived may be plant-derived substances or petroleum-derived substances.

The amorphous polyester resin of the present invention may contain one diol-derived structural unit other than the linear aliphatic diol unit or two or more diol-derived structural units other than the linear aliphatic diol unit.

The amorphous polyester resin of the present invention may contain at least one structural unit selected from the group consisting of a structural unit derived from an acid having a valency equal to or higher than 3 and a structural unit derived from an alcohol having 3 or more hydroxyl groups.

Examples of the structural unit derived from an acid having a valency equal to or higher than 3 include structural units derived from trimellitic acid, pyromellitic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,2,7,8-octanetetracarboxylic acid, and esters thereof or anhydrides thereof.

Among these structural units, a structural unit derived from trimellitic acid or an anhydride thereof is preferable.

Examples of the structural unit derived from an alcohol having 3 or more hydroxyl groups include structural units derived from sorbitol, 1,2,3,6-hexanetetraol, 1,4-sorbitan, pentaerythritol, dipentaerythritol, tripentaerythritol, 1,2,4-butanetriol, 1,2,5-pentanetriol, glycerol, 2-methyl-1,2,3-propanetriol, 2-methyl-1,2,4-butanetriol, trimethylolpropane, 1,3,5-trihydroxymethylbenzene, and the like.

Among these structural units, a structural unit derived from trimethylolpropane is preferable.

The polyester resin of the present invention is amorphous. Therefore, the resin has excellent solvent solubility.

In the present invention, "amorphous" means to have a glass transition point and not to have a melting point.

In order to make the obtained resin amorphous, for example, a method may be used in which the copolymerization amount of a monomer or the like forming a structure such as a bent portion easily disrupting crystallinity in the molecule of the polyester resin is controlled.

Examples of the monomer forming a structure such as a bent portion easily disrupting crystallinity include isophthalic acid, 2,5-furandicarboxylic acid, and a linear aliphatic carboxylic acid having an odd number of carbon atoms.

In the amorphous polyester resin of the present invention, an amount of a matter insoluble in methyl ethyl ketone (MEK) (hereinafter, also called a methyl ethyl ketone-insoluble matter (an MEK-insoluble matter)) with respect to the total mass (100% by mass) of the amorphous polyester resin is preferably equal to or lower than 2% by mass, more preferably equal to or lower than 1% by mass, and even more preferably equal to or lower than 0.5% by mass. An amount of an MEK-insoluble matter may be 0% by mass.

In a case where an amount of an MEK-insoluble matter is equal to or lower than the upper limit described above, the solvent solubility is improved. Therefore, it is easy to suitably use the resin for uses such as adhesives and coating materials in which the resin is handled by being dissolved in a solvent.

In the present invention, an amount of an MEK-insoluble matter refers to an amount of a matter insoluble in MEK in a case where 0.5 g of the polyester resin is dissolved in 50 ml of MEK at 70°C. Specifically, an amount of a MEK-insoluble matter can be measured by the following method.

(MEK-insoluble matter)

About 0.5 g of a sample (polyester resin) was weighed (D (g)) and put in a 100 ml Erlenmeyer flask, 50 ml of MEK was added thereto, and the flask was immersed in a water bath set at 70°C for 3 hours. Meanwhile, up to 60% to 70% of a glass filter 1GP100 was tightly packed with Celite 545, and the glass filter was dried for 3 hours or more in a vacuum drier set at 105°C and weighed (E (g)). Subsequently, the MEK solution in which the sample was dissolved was suction-filtered using the glass filter, and then the glass filter was dried in a vacuum drier at 80°C for 3 hours or more and weighed (F (g)).

An amount of an MEK-insoluble matter was calculated according to the following equation.

$$\text{Amount of MEK-insoluble matter (\% by mass)} = \{(F - E)/D\} \times 100$$

The acid value of the amorphous polyester resin of the present invention is preferably equal to or higher than 5 mg KOH/g, more preferably equal to or higher than 8 mg KOH/g, and even more preferably equal to or higher than 10 mg KOH/g.

In a case where the acid value is equal to or higher than the lower limit described above, the reactivity of the resin tends to be improved.

In a case where the acid value is high, it is easy to make the resin soluble in water by neutralizing the acid terminal by using an alkaline substance such as ammonia, sodium hydroxide, or potassium hydroxide. Therefore, the resin can also be used as aqueous adhesives, coating compositions, and the like.

From the viewpoint of water solubility of the polyester resin, the acid value is preferably equal to or higher than 50 mgKOH/g, and more preferably equal to or higher than 65 mgKOH/g.

In the present invention, the acid value can be measured by the method which will be described later.

The glass transition temperature (Tg) of the amorphous polyester resin of the present invention is preferably -10°C to 80°C, and more preferably 0°C to 70°C.

In a case where Tg is equal to or higher than the lower limit described above, the handleability tends to be improved. In a case where Tg is equal to or lower than the upper limit described above, the smoothness or adhesiveness of a coating film tends to be improved.

In the present invention, Tg can be measured by the method which will be described later.

The softening temperature of the amorphous polyester resin of the present invention is preferably 50°C to 140°C, and more preferably 60°C to 130°C.

In a case where the softening temperature is equal to or higher than the lower limit described above, the handleability tends to be improved. In a case where the softening temperature is equal to or lower than the upper limit described above, the solvent solubility and the smoothness or adhesiveness of a coating film tend to be improved.

In the present invention, the softening temperature can be measured by the method which will be described later.

Hereinafter, an example of a method for manufacturing the amorphous polyester resin of the present invention will be described.

Examples of the method for manufacturing the amorphous polyester resin of the present invention include a known method in which the resin is prepared by polymerization through an esterification reaction or an ester exchange reaction or polycondensation through a condensation reaction between an acid component containing isophthalic acid and 2,5-furandicarboxylic acid represented by Formula (2) and an alcohol component.

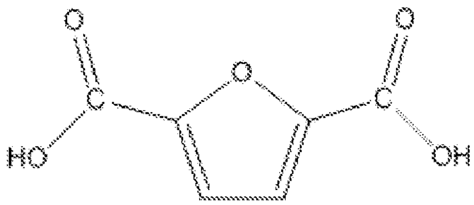

... (2)

The polymerization temperature is not particularly limited, but is preferably 180°C to 280°C, more preferably 200°C to 270°C, and even more preferably 220°C to 270°C.

In a case where the polymerization temperature is equal to or higher than the lower limit described above, the productivity tends to be improved. In a case where the polymerization temperature is equal to or lower than the upper limit described above, the decomposition of the resin or the generation of an odor-causing volatile component tends to be inhibited.

During the polymerization, for example, it is possible to use polymerization catalysts such as titanium tetraalkoxide, titanium oxide, dibutyltin oxide, tin oxide, tin acetate, zinc acetate, tin disulfide, antimony trioxide, germanium dioxide, magnesium acetate, and the like.

Examples of acid components other than 2,5-furandicarboxylic acid and isophthalic acid include aromatic dicarboxylic acids such as divalent carboxylic acids such as terephthalic acid and orthophthalic acid or esters thereof or anhydrides thereof; aliphatic dicarboxylic acids such as sebacic acid, isodecylsuccinic acid, dodecenylsuccinic acid, maleic acid, fumaric acid, adipic acid, succinic acid, or esters thereof or anhydrides thereof.

It is preferable that the alcohol component contains a linear aliphatic diol. Examples of the linear aliphatic diol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, and the like.

Examples of alcohol components other than the linear aliphatic diol include aliphatic diols such as neopentyl glycol, 1,2-propanediol, 1,3-butanediol, diethylene glycol, triethylene glycol, 1,4-cyclohexanedimethanol, and isosorbide; and aromatic diols such as polyoxypropylene(2.0)-2,2-bis(4-hydroxyphenyl)propane, polyoxypropylene(2.2)-2,2-bis(4-hydroxyphenyl)propane, polyoxypropylene(2.3)-2,2-bis(4-hydroxyphenyl)propane, polyoxypropylene(2.4)-2,2-bis(4-hydroxyphenyl)propane, polyoxypropylene(3.3)-2,2-bis(4-hydroxyphenyl)propane, polyoxypropylene(6.0)-2,2-bis(4-hydroxyphenyl)propane, polyoxyethylene(2.0)-2,2-bis(4-hydroxyphenyl)propane, polyoxyethylene(2.2)-2,2-bis(4-hydroxyphenyl)propane, polyoxyethylene(2.3)-2,2-bis(4-hydroxyphenyl)propane, and polyoxypropylene(2.2)-polyoxyethylene(2.0)-2,2-bis(4-hydroxyphenyl)propane.

In a case where the amorphous polyester resin of the present invention contains a structural unit derived from an acid having a valency equal to or higher than 3, as the acid component, it is possible to use trimellitic acid, pyromellitic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,2,7,8-octanetetracarboxylic acid, esters thereof or anhydrides thereof, and the like.

Among these acids and esters thereof or anhydrides thereof, trimellitic acid or an anhydride thereof is preferable.

In a case where the amorphous polyester resin of the present invention contains a structural unit derived from an alcohol having 3 or more hydroxyl groups, as the alcohol component, it is possible to use sorbitol, 1,2,3,6-hexanetetraol, 1,4-sorbitan, pentaerythritol, dipentaerythritol, tripentaerythritol, 1,2,4-butanetriol, 1,2,5-pentanetriol, glycerol, 2-methyl-1,2,3-propanetriol, 2-methyl-1,2,4-butanetriol, trimethylolpropane, 1,3,5-trihydroxymethylbenzene, and the like.

Among these alcohols having 3 or more hydroxyl groups, trimethylolpropane is preferable.

The amorphous polyester resin of the present invention has excellent solvent solubility and excellent gas barrier properties. Therefore, the amorphous polyester resin of the present invention can be used as an adhesive or a coating composition by being dissolved in a solvent.

In addition, a multilayer body of the present invention is obtained by laminating various substrates by using an adhesive of the present invention containing the amorphous polyester resin of the present invention.

Furthermore, a multilayer body of the present invention having excellent gas barrier properties is obtained by coating various substrates with a coating composition of the present invention containing the amorphous polyester resin of the present invention.

[Examples]

Examples of the present invention will be described below, but the embodiments of the present invention are not limited thereto.

The resin or coating film described in the present examples is evaluated by the following method.

(1) Polyester resin evaluation method

(Measurement of resin composition)

A sample was dissolved in deuterated chloroform and measured under the following conditions by using NMR (ECS-400, JEOL Ltd.) at a measurement temperature of 50°C.

$^1H$: observation frequency 400 MHz number of times of integration 256

$^{13}C$: observation frequency 100 MHz number of times of integration 10,000

(Glass transition temperature (Tg))

A sample was precisely weighed (10 ± 0.5 mg) and put in an aluminum pan, thereby preparing a cell. The cell was heated for 10 minutes on a hot plate at 100°C and then rapidly cooled by being brought into close contact with dry ice. Then, by using a differential scanning calorimeter DSC-60 Plus manufactured by Shimadzu Corporation, the sample was measured by being heated up to 200°C from a temperature lower than Tg by 20°C or more at a heating rate of 5°C/min. In a chart obtained by the measurement, the temperature at the point of intersection of the baseline on the low temperature side and the tangent line of the heat absorption curve in the vicinity of the glass transition temperature was determined and adopted as Tg. In addition, whether or not a peak indicating the melting point of the resin is in the chart was checked. In a case where no such a peak was found, the resin was determined as amorphous.

(Softening temperature (T1/2))

By using a flow tester CFT-500D manufactured by Shimadzu Corporation and a 1 mmφ x 10 mm nozzle, a sample was measured by being heated at a constant heating rate of 3°C/min under a load of 294 N (30 Kgf). At this time, a temperature at which 1/2 of the 1.0 g of the sample flowed out was adopted as a softening temperature.

(Acid value (AV))

About 0.2 g of a sample was precisely weighed and put in an Erlenmeyer flask with a branch (A (g)), 20 ml of

benzyl alcohol was added thereto, and the flask was heated on a heater at 230°C for 15 minutes in a nitrogen atmosphere so that the resin was dissolved. The flask was left to cool to room temperature, then 20 ml of chloroform and several drops of cresol red solution were added thereto, and the sample solution was titrated with a 0.02 N KOH solution until the sample solution turned light purple (titration amount = B (ml), titer of KOH solution = p). Blank measurement was performed in the same manner (titration amount = C (ml)), and the acid value was calculated according to the following equation.

$$\text{Acid value (mg KOH/g)} = (B - C) \times 0.02 \times 56.11 \times p \div A$$

(Matter insoluble in MEK (MEK-insoluble matter))

About 0.5 g of a sample was weighed (D (g)) and put in a 100 ml Erlenmeyer flask, 50 ml of MEK was added thereto, and the flask was immersed in a water bath set at 70°C for 3 hours. Meanwhile, up to 60% to 70% of a glass filter 1GP100 was tightly packed with Celite 545, and the glass filter was dried for 3 hours or more in a vacuum drier set at 105°C and weighed (E (g)). Subsequently, by using the glass filter, the MEK solution in which the sample was dissolved was suction-filtered. By using MEK, all the contents remaining on the inner wall of the Erlenmeyer flask were moved into the glass filter, and MEK was allowed to flow through the glass filter so that all the soluble matters fell into a suction bottle. Suction was continued so that no MEK remained in the glass filter, and then the glass filter was dried in a vacuum drier at 80°C for 3 hours or more and weighed (F (g)).

A amount of a MEK-insoluble matter was calculated according to the following equation.

$$\text{Amount of MEK-insoluble matter (\% by mass)} = \{(F - E)/D\} \text{ x } 100$$

(Gas barrier properties)

A sample (3.0 g) was dissolved in 7.0 g of MEK, thereby preparing a 30% by mass MEK solution. By using a #20 bar coater, a PET film having a thickness of 15 μm was coated with the solution and then dried at room temperature for 24 hours or more. The total thickness of the obtained coating film and the PET film was 22 μm. That is, the thickness of the coating film was 7 μm.

Each of the PET film as a substrate and the coating film was cut in a size of 60 mmφ, and the oxygen transmission rate thereof was measured using a gas transmission rate measuring device K-315N-01 manufactured by Toyo Rika Co., Ltd., thereby obtaining a transmission coefficient expressed in unit of [mL (stp) cm]/($cm^2$·sec cmHg).

By the comparison between the obtained transmission coefficient and the transmission coefficient of the PET film, the gas barrier properties-improving effect brought about by the coating material was calculated and evaluated based on the following indices. In the table, oxygen barrier properties (MEK solution) are described using the following indices, and the barrier properties relative to those of the PET film are described using specific numerical values.

A: (Excellent) Compared to the gas barrier properties of PET, the gas barrier properties of the coating material are improved by a factor equal to or higher than 1.5.
B: (Fine) Compared to the gas barrier properties of PET, the gas barrier properties of the coating material are improved by a factor less than 1.5.
C: (Ineffective) The gas barrier properties of the coating material are equal to or lower than the gas barrier properties of PET.
D: (Unmeasurable) The sample cannot be used for coating because an amount of a matter insoluble in a solvent is high in the sample.

(Weight average molecular weight (Mw))

A sample was precisely weighed (0.02 g) and put in a sample bottle, and tetrahydrofuran was added thereto, so that the solution weighed 10 g and the concentration was adjusted to 0.2% by mass. The bottle was sealed and left to stand overnight so that the sample was dissolved. Then, the solution was passed through a membrane filter having a pore size of 0.5 μm, thereby preparing a sample solution.

The sample solution was measured under the following conditions by using HLC-8220GPC manufactured by Tosoh Corporation, and the molecular weight thereof was converted from the prepared 10-point standard polystyrene calibration curve.

Temperature: 40°C
Column: TSK guard column HXL-H and TSK gel GMHXL x 3 (manufacture by Tosoh Corporation)
Flow rate: 1.0 mL/min
Sample amount: 100 μL
Detector: RI

(Example 1)

The acid component and alcohol component shown in Table 1 and tetra-n-butoxytitanium in an amount of 500 ppm with respect to the total amount of the components were put into a reaction vessel equipped with a distillation column. "Composition ratio of used component" described in Table 1 is a ratio (part by mole) of each component to the total amount (100 parts by mole) of acid components.

Thereafter, the rotation frequency of a stirring blade in the reaction vessel was kept at 200 rpm. In this state, heating was started and continued until the internal temperature of the reaction system reached 265°C, and then the temperature was maintained. After the esterification reaction ended and water was no longer distilled from the reaction system, the internal temperature of the reaction system was lowered and kept at 220°C, the internal pressure of the reaction vessel was reduced for about 20 minutes until the degree of vacuum reached 133 Pa, and a condensation reaction was carried out in a state where diol components were being allowed to be distilled from the reaction system.

With the progress of the reaction, the viscosity of the reaction system increased, and the degree of vacuum was raised as the viscosity increased. The condensation reaction was performed until the torque of the stirring blade reached a value showing the desired softening temperature. At a point in time when the torque reached a predetermined value, stirring was stopped, the reaction system was returned to normal pressure by using nitrogen, and the reaction product was taken out, thereby obtaining a polyester resin.

Table 1 shows the composition and characteristic values of the obtained polyester resin.

In addition, the obtained polyester resin was evaluated using the evaluation methods described above. The results are shown in Table 1.

The obtained polyester resin was amorphous.

(Examples 2 to 5 and Comparative Examples 1 to 3)

Polyester resins were obtained and evaluated by the same method as that in Example 1, except that the acid component and the alcohol component were changed as shown in Table 1.

Table 1 shows the composition, characteristic values, and evaluation results of the obtained polyester resins.

Each of the obtained polyester resins was amorphous.

[Table 1]

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Composition ratio of used component (part by mole) | Acid component | FDCA | 50 | 50 | 40 | 50 | 50 | 50 | | 50 |
| | | TPA | | | | | 20 | 50 | 70 | 40 |
| | | IPA | 50 | 50 | 60 | 50 | 30 | | 30 | 10 |
| | Alcohol component | EG | 60 | 60 | 40 | 50 | 50 | 70 | 28 | 50 |
| | | 1,3-PDO | 40 | | | 40 | 40 | 40 | | 40 |
| | | 1,9-NDO | | 40 | | | | | | |
| | | NPG | | | 50 | | | | 70 | |
| | | TMP | | | | | | | 7 | |
| Composition of resin (part by mole) | Acid component | FDCA | 50 | 50 | 40 | 50 | 50 | 50 | | 50 |
| | | TPA | | | | | 20 | 50 | 70 | 40 |
| | | IPA | 50 | 50 | 60 | 50 | 30 | | 30 | 10 |
| | FDCA + IPA/acid | | 100 | 100 | 100 | 100 | 80 | 50 | 30 | 60 |
| | Alcohol component | EG | 58 | 59 | 40 | 50 | 50 | 64 | 24 | 50 |
| | | 1,3-PDO | 40 | | | 40 | 40 | 40 | | 40 |
| | | 1,9-NDO | | 40 | | | | | | |
| | | NPG | | | 50 | | | | 69 | |
| | | TMP | | | | | | | 7 | |
| Physical properties of resin | T9 | °C | 53.5 | 17.5 | 55.8 | 43.3 | 45 | 51.7 | 55.4 | 47.7 |
| | T1/2 | °C | 112 | 81 | 111 | 101 | 104 | 108 | 114 | 105 |
| | AV | mgKOH/g | 23.1 | 16.8 | 64.1 | 66.4 | 68.8 | 8.3 | 14.9 | 71 |
| | Mw | | 6,800 | 10,300 | 3,100 | 2,700 | 2,600 | 6,400 | 11,000 | 2,600 |
| Evaluation | Amount of MEK-insoluble matter (% by mass) | | 0 | 0 | 0 | 0 | 1.6 | 10.5 | 0 | 4.2 |
| | Oxygen barrier properties (MEK solution) | | A | B | B | A | B | D | C | C |
| | Barrier properties compared with those of PET film (times) | | 1.86 | 1.25 | 1.08 | 1.88 | 1.09 | - | 0.99 | 1.01 |

The symbols in the table mean the following.
FDCA: 2,5-furandicarboxylic acid,
TPA: terephthalic acid,
IPA: isophthalic acid,
EG: ethylene glycol,
1,3-PDO: 1,3-propanediol,
1,9-NDO: 1,9-nonanediol,
NPG: neopentyl glycol,
TMP: trimethylolpropane.

As shown in Table 1, the polyester resin of the present invention had excellent solvent solubility and excellent gas barrier properties.

The polyester resin of Comparative Example 1 that did not contain a structural unit derived from isophthalic acid exhibited poorer solvent solubility and gas barrier properties than those of the polyester resin of the present invention.

The polyester resin of Comparative Example 2 that did not contain a structural unit derived from 2,5-furandicarboxylic acid exhibited poorer gas barrier properties than that of the polyester resin of the present invention.

The polyester resin of Comparative Example 3, in which a total amount of the structural unit (1) and the isophthalic acid unit in the polyester resin was less than 70 parts by mole with respect to the total amount of 100 parts by mole of structural units derived from acid components contained in the polyester resin, exhibited poorer solvent solubility and gas barrier properties than those of the polyester resin of the present invention.

## Claims

**1.** An amorphous polyester resin, comprising:

a structural unit represented by General Formula (1); and
a structural unit derived from isophthalic acid,
wherein a total amount of the structural unit represented by General Formula (1) and the structural unit derived from the isophthalic acid in the amorphous polyester resin is equal to or higher than 70 parts by mole with respect to the total amount of 100 parts by mole of structural units derived from acid components contained in the amorphous polyester resin.

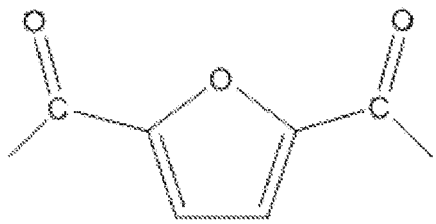

· · · (1)

**2.** The amorphous polyester resin according to claim 1, further comprising:
a structural unit derived from a linear aliphatic diol.

**3.** The amorphous polyester resin according to claim 2,
wherein a total amount of the structural unit derived from the linear aliphatic diol is equal to or higher than 60 parts by mole with respect to the total amount of 100 parts by mole of the structural units derived from the acid components contained in the amorphous polyester resin.

**4.** The amorphous polyester resin according to any one of claims 1 to 3,
wherein an amount of a methylethylketone-insoluble matter is equal to or lower than 2% by mass.

**5.** The amorphous polyester resin according to any one of claims 1 to 4,
wherein an acid value is equal to or higher than 5 mg KOH/g.

**6.** An adhesive, comprising:
the amorphous polyester resin according to any one of claims 1 to 5.

**7.** A coating composition, comprising:
the amorphous polyester resin according to any one of claims 1 to 5.

**8.** A multilayer body, comprising:
the amorphous polyester resin according to any one of claims 1 to 5.

## INTERNATIONAL SEARCH REPORT

International application No.
PCT/JP2019/023695

A. CLASSIFICATION OF SUBJECT MATTER
Int.Cl. C08G63/672(2006.01)i, B32B27/36(2006.01)i, C09D167/00(2006.01)i, C09J167/00(2006.01)i

According to International Patent Classification (IPC) or to both national classification and IPC

B. FIELDS SEARCHED

Minimum documentation searched (classification system followed by classification symbols)
Int.Cl. C08G63/672, B32B27/36, C09D167/00, C09J167/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | WO 2018/012572 A1 (KURARAY CO., LTD.) 18 January 2018, claims, paragraphs [0047]-[0054], [0060], table 1 & EP 3486275 A1 claims, paragraphs [0046]-[0053], example 3, table 1 & CN 109476857 A | 1-5, 8<br>6, 7 |
| X<br>A | WO 2012/005647 A1 (PERSTORP AB) 12 January 2012, claims, page 1, lines 9-14, example 1 & EP 2591039 A1 | 1, 4-8<br>2, 3 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 August 2019 (16.08.2019) | 17 September 2019 (17.09.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No. PCT/JP2019/023695

C (Continuation). DOCUMENTS CONSIDERED TO BE RELEVANT

| Category* | Citation of document, with indication, where appropriate, of the relevant passages | Relevant to claim No. |
|---|---|---|
| X<br>A | CN 106866948 A (UNIV TSINGHUA) 20 June 2017, claims, paragraphs [0087]-[0094] (Family: none) | 1, 2, 4<br>3, 5-8 |
| P, X<br>P, A | CN 108727575 A (UNIV NATIONAL DONG HWA) 02 November 2018, claims, paragraphs [0002], [0187] (Family: none) | 1, 4<br>2, 3, 5-8 |
| A | WO 2015/108026 A1 (TOYOBO CO., LTD.) 23 July 2015, entire text (Family: none) | 1-8 |
| A | JP 2015-514143 A (ARMSTRONG WORLD INDUSTRIES, INC.) 18 May 2015, entire text & US 2013/0239852 A1 whole document & US 2014/0102335 A1 & CN 104284931 A & KR 10-2015-0000886 A & KR 10-2017-0005185 A | 1-8 |
| A | KR 10-2014-0088972 A (HUVIS CORP.) 14 July 2014, entire text (Family: none) | 1-8 |
| A | JP 2017-30346 A (KAO CORP.) 09 February 2017, entire text & US 2018/0009160 A1 whole document & EP 3254836 A1 & CN 107206673 A & KR 10-2017-0115558 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018118380 A
- JP 2014133797 A
- JP 2015147895 A
- JP 2017518406 A